# FASCICULE DE BREVET EUROPEEN

(11) **EP 2 946 705 B1**
(45) Date de publication et mention de la délivrance du brevet: **15.03.2017**
(21) Numéro de dépôt: 15168041.0
(22) Date de dépôt: 18.05.2015
(51) Int. Cl.: A47J 31/44, A47J 31/60, B01F 3/04

(54) **DISPOSITIF DE PRODUCTION DE BOISSONS À BASE DE LAIT MUNI DE MOYENS DE SÉCURITÉ ET MACHINE À CAFÉ COMPORTANT UN TEL DISPOSITIF**
VORRICHTUNG ZUR ZUBEREITUNG VON GETRÄNKEN AUF MILCHBASIS, DIE MIT SICHERHEITSMITTELN AUSGESTATTET IST, UND KAFFEEMASCHINE, DIE EINE SOLCHE VORRICHTUNG UMFASST
DEVICE FOR PRODUCING MILK-BASED BEVERAGES PROVIDED WITH SAFETY MEANS AND COFFEE MACHINE COMPRISING SUCH A DEVICE

(30) Priorité: 23.05.2014 FR 1454671
(43) Date de publication de la demande: 25.11.2015
(73) Titulaire: SEB S.A., 69130 Ecully (FR)
(72) Inventeur: Beaudet, Olivier, 61140 GENESLAY (FR); Guerin, Christophe, 53150 St CHRISTOPHE du LUAT (FR)
(74) Mandataire: Bourrières, Patrice

(56) Documents cités:
- WO-A1-2011/064702
- WO-A2-2010/044116

## Description

La présente invention se rapporte au domaine technique général des appareils de production de boissons à base de lait, en particulier des dispositifs destinés à coopérer avec un embout de buse de sortie vapeur d'une machine à café pour produire une boisson à base de lait, notamment de lait chauffé et moussé.

Il est connu do document WO 2010/044116 un dispositif de production d'une boisson à base de lait. Il est aussi connu du document EP2047779 de réaliser un dispositif de production d'une boisson à base de lait comportant un système d'accouplement destiné à coopérer avec un embout de buse de sortie vapeur d'une machine à café, ledit système d'accouplement permettant, dans une position accouplée, d'établir une liaison étanche entre l'embout de buse de sortie vapeur et le dispositif, et permettant d'obtenir une position désaccouplée dans laquelle le dispositif est séparé de l'embout de buse de sortie vapeur. Le dispositif comporte un conduit de distribution de la boisson à base de lait, amovible entre une position assemblée sur le dispositif et une position extraite du dispositif. Le conduit de distribution est articulé dans un canal horizontal et orienté vers l'utilisateur.

En fonctionnement, l'utilisateur peut accoupler le dispositif à l'embout de buse de sortie vapeur d'une machine à café en ayant oublié de mettre en place le conduit de distribution vapeur et lancer un cycle de production de boisson à base de lait. Ainsi, un jet alliant de la vapeur et de la boisson est projeté vers l'avant et peut blesser l'utilisateur.

L'utilisateur peut également, pendant un cycle de distribution de boisson à base de lait, manoeuvrer le conduit de distribution vapeur et accidentellement le retirer du dispositif. Ainsi, de la même manière que dans le cas précédent, un jet alliant de la vapeur et de la boisson est projeté vers l'avant et peut blesser l'utilisateur.

Un but de la présente invention est de remédier aux inconvénients précités et de proposer un dispositif de production d'une boisson à base de lait ainsi qu'une machine à café mettant en oeuvre ce dispositif qui présente une mise en oeuvre simple et ergonomique et qui fonctionne en toute sécurité.

Un autre but de la présente invention est de proposer un dispositif de production d'une boisson à base de lait ainsi qu'une machine à café mettant en oeuvre ce dispositif qui présente une conception simple et qui soit économique à mettre en oeuvre.

Ces buts sont atteints avec un dispositif de production d'une boisson à base de lait comportant un système d'accouplement destiné à coopérer avec un embout de buse de sortie vapeur d'une machine à café, ledit système d'accouplement présentant une position accouplée, dans laquelle une liaison étanche est établie entre l'embout de buse de sortie vapeur et le dispositif et une position désaccouplée, dans laquelle le dispositif peut être séparé de l'embout de buse de sortie vapeur, le dispositif comportant un système de moussage amovible entre une position assemblée sur le dispositif, et une position extraite du dispositif, caractérisé en ce que le dispositif comporte des moyens de sécurité à l'extraction qui empêche le système de moussage de passer de la position assemblée à la position extraite lorsque le système d'accouplement est en position accouplée et/ou des moyens de sécurité à l'accouplement qui empêchent le système d'accouplement de passer de la position désaccouplée à la position accouplée lorsque le système de moussage n'est pas en position assemblée.

L'utilisateur ne peut donc pas accoupler le dispositif sur l'embout de buse de sortie vapeur d'une machine à café si le système de moussage n'est pas en position assemblée. Ainsi, le risque d'une émission d'un jet de vapeur par le dispositif en cas d'absence du système de moussage est évité.

En fonctionnement, lorsqu'un cycle de production de boisson à base de lait est en cours, l'utilisateur ne peut retirer le système de moussage. Ainsi, le risque d'une émission d'un jet de vapeur par le dispositif en cas de retrait du système de moussage est supprimé.

Avantageusement, les moyens de sécurité à l'extraction et/ou les moyens de sécurité à l'accouplement sont des moyens mécaniques.

Cette disposition permet d'obtenir des moyens de sécurité à l'extraction et/ou des moyens de sécurité à l'accouplement simples et fiables.

Avantageusement, les moyens de sécurité à l'extraction du système de moussage comportent un verrou appartenant au système d'accouplement, ledit verrou étant mobile entre une position de maintien du système de moussage lorsque le système d'accouplement est en position accouplée et une position de libération du système de moussage lorsque le système d'accouplement est en position désaccouplée.

De préférence, le verrou coopère en position de maintien avec une cavité agencée sur le système de moussage.

Ces dispositions permettent d'obtenir des moyens de sécurité à l'extraction du système de moussage qui présentent une conception simple et qui soient économique à mettre en oeuvre. La cavité et le verrou peuvent comporter des chanfreins ou des parois inclinées pour favoriser la mise en place du verrou dans la cavité.

Avantageusement, le verrou est mobile en rotation.

Cette disposition permet de réaliser de manière très économique un verrou mobile.

De préférence, le système d'accouplement comporte un mors mobile, un levier de manoeuvre et une pièce de transmission du mouvement du levier au mors mobile, la pièce de transmission comportant le verrou.

Avantageusement, les moyens de sécurité à l'accouplement comportent une butée mobile entre une position bloquée et une position désengagée.

De préférence, la butée comporte une excroissance coopérant avec le système de moussage pour faire passer la butée de la position bloquée à la position désengagée lorsque le système de moussage passe de la position extraite à la position assemblée.

Avantageusement, les moyens de sécurité à l'accouplement comportent des moyens de rappel de la butée de la position désengagée vers la position bloquée.

Cette disposition permet d'obtenir un retour automatique de la butée de la position désengagée vers la position bloquée.

De préférence, les moyens de rappel comportent un ressort.

Cette disposition permet de réaliser de manière très économique des moyens de rappel.

Avantageusement, les moyens de sécurité à l'accouplement comportent un organe mobile faisant partie du système d'accouplement, ledit organe mobile coopérant avec la butée pour immobiliser le système d'accouplement lorsque la butée est en position bloquée et libérer le système d'accouplement lorsque la butée est en position désengagée.

De préférence, le système d'accouplement comporte un mors mobile, un levier de manoeuvre et une pièce de transmission du mouvement du levier au mors mobile, l'organe mobile étant formé par la pièce de transmission.

L'invention concerne également une machine à café comportant un dispositif de production d'une boisson à base de lait tel que précédemment décrit.

Avantageusement, l'embout de buse de sortie vapeur est coudé vers le bas.

Ainsi, en cas de mauvaise manoeuvre, notamment une commande de la sortie vapeur alors que le dispositif n'est pas en place, le jet de vapeur est dirigé vers le bas et non vers l'utilisateur. Ainsi, cette disposition permet d'obtenir un fonctionnement plus sûr, même en cas de mauvaise manoeuvre.

L'invention sera mieux comprise à l'étude des modes de réalisation pris à titre nullement limitatif et illustrés dans les figures annexées dans lesquelles :
- La figure 1 illustre une vue en perspective d'un dispositif de production d'une boisson à base de lait coopérant avec un embout de buse de sortie vapeur d'une machine à café selon un mode particulier de réalisation de l'invention.
- La figure 2 illustre une vue en perspective du dispositif de production d'une boisson à base de lait coopérant avec l'embout de buse de sortie vapeur dans une position accouplée, illustré sur la figure 1.
- La figure 3 illustre une vue en perspective du dispositif de production d'une boisson à base de lait illustré sur la figure 1, le dispositif et l'embout de buse de sortie vapeur étant dans une position désaccouplée.
- La figure 4 illustre une vue éclatée en perspective du dispositif de production d'une boisson à base de lait et de l'embout de buse de sortie vapeur illustré sur la figure 1.
- La figure 5 illustre une vue suivant le plan de coupe V du système de moussage du dispositif de production d'une boisson à base de lait illustré sur la figure 4.
- La figure 6 illustre une vue suivant le plan de coupe VI du dispositif de production d'une boisson à base de lait et de l'embout de buse de sortie vapeur illustré sur la figure 2.
- La figure 7 illustre une vue suivant le plan de coupe VII du dispositif de production d'une boisson à base de lait illustré sur la figure 3.
- La figure 8 illustre une vue en perspective du dispositif de manoeuvre du mors mobile du dispositif de production d'une boisson à base de lait et de l'embout de buse de sortie vapeur illustré sur la figure 1.
- La figure 9 illustre une vue de détail en éclaté de la buse de sortie café et l'extrémité du conduit de distribution du dispositif de production d'une boisson à base de lait et de la machine à café illustré à la figure 1.
- La figure 10 illustre une vue de face du dispositif de production d'une boisson à base de lait coopérant avec la machine à café illustré à la figure 1, la buse de sortie café ainsi que l'extrémité du conduit de distribution étant en position relevée.
- La figure 11 illustre une vue de face du dispositif de production d'une boisson à base de lait coopérant avec la machine à café illustré à la figure 1, la buse de sortie café ainsi que l'extrémité du conduit de distribution étant en position abaissée.
- La figure 12 illustre une vue en perspective écorchée du dispositif de production d'une boisson à base de lait illustré à la figure 1, le système de moussage étant en position assemblée et le système d'accouplement en position accouplée.
- La figure 13 illustre une vue en perspective écorchée du dispositif de production d'une boisson à base de lait illustré à la figure 1, le système de moussage étant en position extraite et le système d'accouplement en position désaccouplée.

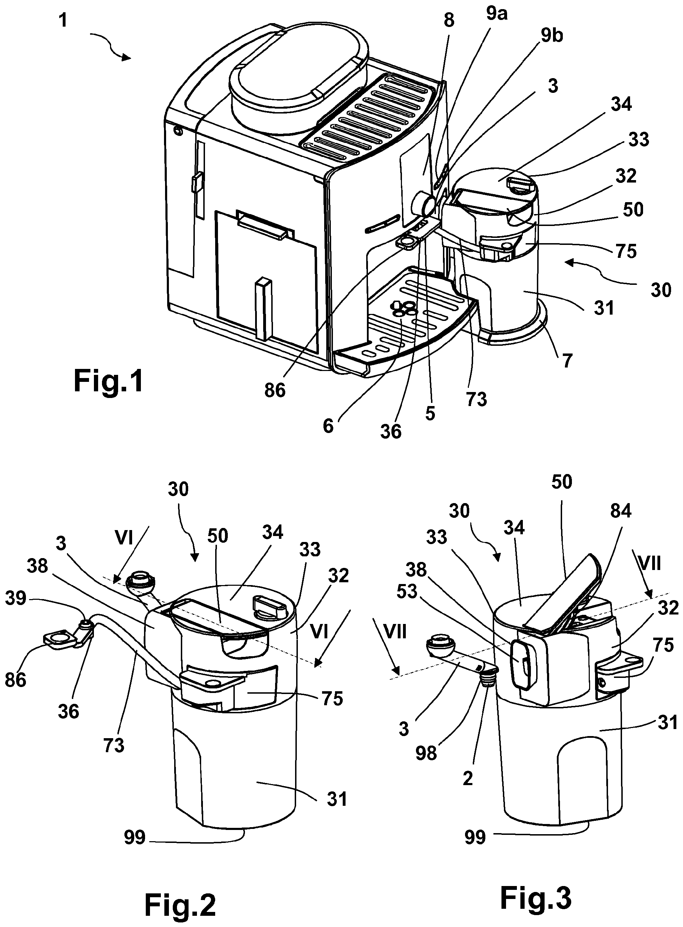

Dans l'exemple de réalisation représenté à la figure 1, un dispositif 30 de production d'une boisson à partir de lait est accouplée à un embout de buse de sortie vapeur 2 d'une machine à café 1. La machine à café 1 comporte une chaudière (non illustrée sur les figures) permettant de produire de l'eau chaude et/ou de la vapeur pour alimenter l'embout de buse de sortie vapeur 2. La machine à café 1 comporte un conduit vapeur 3 articulé (Fig.3), qui s'étend vers l'extérieur de la machine à café 1 et se termine par l'embout de buse de sortie vapeur 2. L'embout de buse de sortie vapeur 2 est agencé verticalement pour que le jet de vapeur soit dirigé vers le bas. La machine à café 1 comporte une chambre d'infusion (non illustrée sur les figures) alimentée en eau chaude pour préparer un café qui est distribué par une buse de sortie café 5 agencée au-dessus d'un repose-tasse 6 recevant un récipient (non illustré sur les figures).

La machine à café 1 peut être à la base une machine à café comportant une buse de moussage et de réchauffage de lait amovible telle que décrite dans la demande de brevet EP2606783. La buse de moussage et de réchauffage est détachée de l'embout de buse de sortie vapeur 2 et le dispositif 30 de production d'une boisson à partir de lait, notamment de lait chauffé et moussé, est accouplé en lieu et place à l'embout de buse de sortie vapeur 2. Le dispositif 30 comporte un conduit de distribution 73 du lait chauffé et moussé comprenant une extrémité 36 libre. L'extrémité 36 par laquelle s'écoule le lait chauffé et moussé est agencée au voisinage de la buse de sortie café 5 de manière détachable et permet de réaliser notamment un cappuccino. La machine à café 1 peut comporter une base de réception 7 du dispositif 30 agencé à coté du repose-tasse 6. La machine à café 1 comporte un tableau de commande 8 comportant notamment un bouton de commande 9a d'un cycle de production de vapeur. Le tableau de commande 8 peut comporter un bouton de commande 9b de distribution d'un cappuccino, soit l'enchainement d'un cycle de distribution de lait chaud moussé et d'un cycle de distribution d'un café.

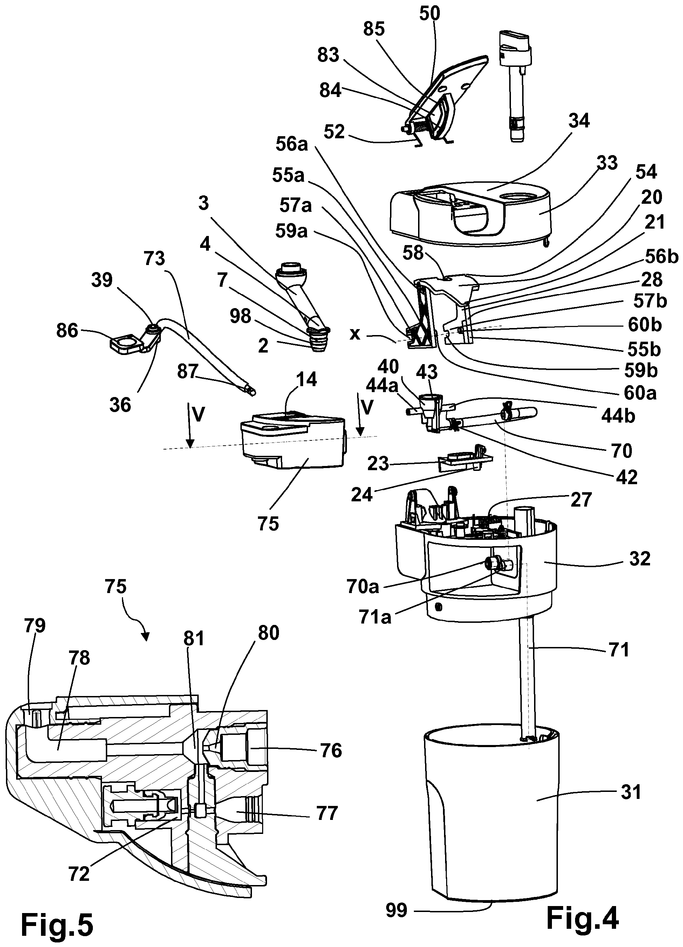

Conformément aux figures 4 et 5, le dispositif 30 comporte un réservoir 31 permettant de recevoir du lait et un système de moussage 75. Le système de moussage 75 se présente sous la forme d'une cassette amovible du dispositif 30 pour faciliter son nettoyage. Le dispositif 30 comporte un couvercle 32 disposé sur le réservoir 31. Le système de moussage 75 est agencé de manière amovible dans le couvercle 32. Le dispositif 30 comporte un conduit d'entrée vapeur 70, un conduit lait 71, un conduit air 72 et le conduit de distribution 73 du lait chauffé et moussé. Le conduit d'entrée vapeur 70 comporte une extrémité 70a qui est raccordée au système de moussage 75 par une chambre d'entrée 76. La chambre d'entrée 76 comprend une portion convergente 80 apte à créer un effet venturi lors de l'injection de la vapeur, c'est-à-dire apte à créer une dépression dans une cavité 81 agencée en aval de la portion convergente 80. Le conduit lait 71 comporte une extrémité 71 a qui est raccordée au système de moussage 75 par une chambre d'entrée 77 reliée à la cavité 81. Le système de moussage 75 comporte le conduit air 72 qui relie l'air extérieur à la cavité 81. La dépression créée dans la cavité 81 permet d'aspirer dans cette cavité 81 du lait et de l'air qui vont se mélanger à la vapeur pour former le lait moussé. Le conduit de distribution 73 du lait moussé est raccordé au système de moussage 75 par une chambre de sortie 78 reliée à la cavité 81.

Tel que visible aux figures 4 à 8, le dispositif 30 de production d'une boisson à partir de lait comporte un système d'accouplement à l'embout de buse de sortie vapeur 2 comportant un mors fixe 46 et un mors 40 mobile. Le mors 40 est mobile entre une position accouplée dans laquelle une liaison étanche est établie entre l'embout de buse de sortie vapeur 2 et le conduit d'entrée vapeur 70 et dans laquelle le dispositif 30 ne peut pas être séparé de l'embout de buse de sortie vapeur 2, et une position désaccouplée dans laquelle le dispositif 30 peut être séparé de l'embout de buse de sortie vapeur 2. Le mors 40 mobile est formé par un réceptacle 41 comprenant un conduit latéral 42 au conduit d'entrée vapeur 70. Ainsi, le mors 40 mobile forme une extrémité du conduit d'entrée vapeur 70. Pour permettre la mobilité du mors 40, le conduit d'entrée vapeur 70 est réalisé au moins partiellement en un matériau souple. Le réceptacle 41 a une forme générale conique qui reprend la forme extérieure de l'embout de buse de sortie vapeur 2. Le réceptacle 41 comporte une ouverture supérieure 43 dans laquelle l'embout de buse de sortie vapeur 2 est inséré lors de l'accouplement.

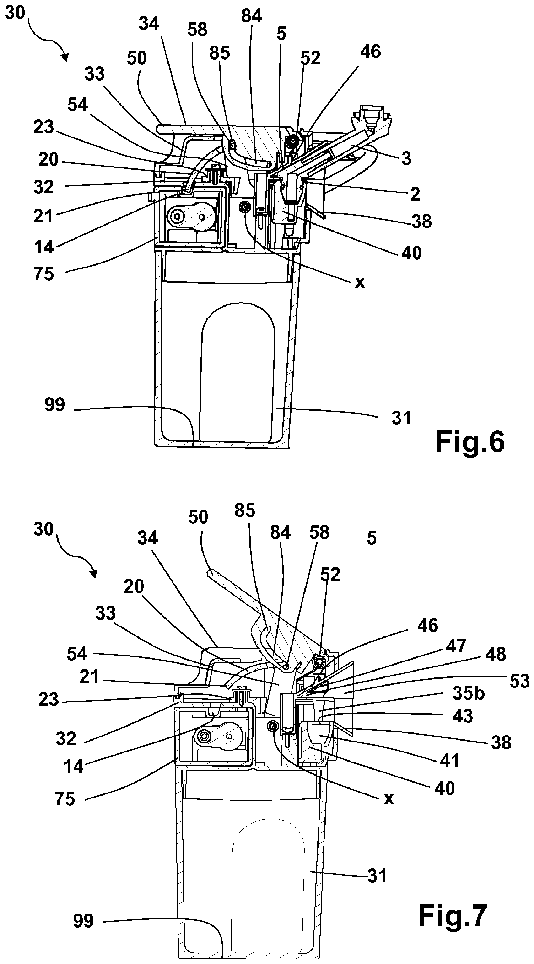

Le mors 40 mobile est agencé dans le couvercle 32 et il est mobile suivant une direction verticale à l'encontre du mors fixe 46 lors de l'accouplement. Le mors 40 mobile comporte deux tourillons 44a, 44b latéraux coopérant avec deux fentes 35a (non représenté sur les figures), 35b ménagées dans le couvercle 32. Le mors fixe 46 est agencé dans le couvercle 32, au-dessus du mors 40 mobile et comprend une paroi 47 définissant un logement de réception 48 d'une face supérieure 4 de l'embout de buse de sortie vapeur 2 (Fig.7).

Le couvercle 32 comporte une paroi 38 de forme tronconique s'étendant radialement vers l'extérieur et formant un logement 53 de réception destiné à guider l'embout de buse de sortie vapeur 2 au-dessus du mors 40 mobile, lors de l'accouplement.

Le système d'accouplement comporte un levier 50 de manoeuvre du mors 40 mobile. Le couvercle 32 comporte un capot supérieur 33 définissant une face supérieure 34 du couvercle 32 sur laquelle le levier 50 est agencé. Le levier 50 est mobile en rotation entre une position déployée au-dessus de la face supérieure 34 dans laquelle le mors 40 mobile est en position désaccouplée (Fig. 3 et 7) et une position rabattue sur la face supérieure 34 dans laquelle le mors 40 mobile est en position accouplée (Fig.2 et 6). Le levier 50 comporte une nervure inférieure 83 comprenant un chemin de came 84.

Le système d'accouplement comporte une pièce de transmission 54 du mouvement du levier 50 au mors 40 mobile. La pièce de transmission 54 comporte deux parois latérales 55a, 55b parallèles, en forme de L. Chaque paroi latérale 55a, 55b comporte donc une grande branche 56a, 56b et une petite branche 57a, 57b liées entre elles à la base du L. La pièce de transmission 54 comporte à la base du L deux tourillons 60a, 60b. Ainsi la pièce de transmission est montée mobile en rotation dans le couvercle 32 autour d'un axe x passant par les tourillons 60a, 60b. Les grandes branches 56a, 56b sont reliées entre elles à partir de leurs extrémités par une tige 58. Les petites branches 57a, 57b comportent à leurs extrémités des logements 59a, 59b de forme allongée, sensiblement oblongue. La tige 58 coopère avec le chemin de came 84 du levier 50 et les logements 59a, 59b coopèrent avec les tourillons 44a, 44b du mors 40 mobile. Le chemin de came 84 comporte une portion d'extrémité 85 sensiblement verticale lorsque le levier 50 est en position rabattue et qui forme une inflexion dans le profil du chemin de came 84. Le levier 50 est maintenu en position déployée sous l'action d'un ressort de rappel 52.

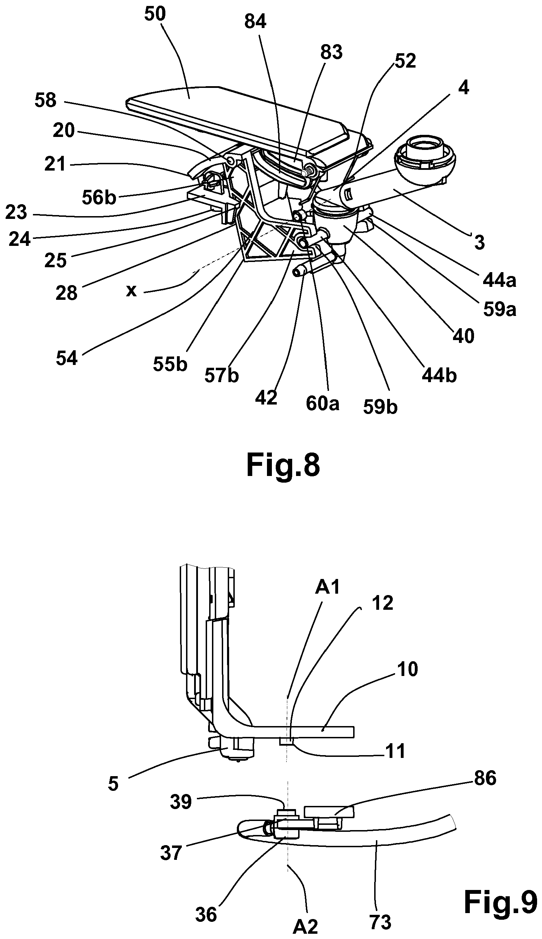

Conformément à la figure 9, la buse de sortie café 5 comporte une patte de préhension 10 s'étendant horizontalement vers l'extérieur de la machine à café. La patte de préhension 10 comprend une protubérance 11, sensiblement cylindrique d'axe A1, qui s'étend vers le bas. La protubérance 11 comprend une partie magnétique 12, réalisée notamment en un acier ferromagnétique.

L'extrémité 36 du conduit de distribution 73 comporte un aimant 37 agencé sous un logement de réception 39. Le logement de réception 39 présente une forme cylindrique d'axe A2, complémentaire de la forme de la protubérance 11 avec laquelle il est destiné à coopérer pour assembler l'extrémité 36 sur la buse de sortie café 5. L'extrémité 36 du conduit de distribution 73 comporte une poignée 86 de préhension, s'étendant perpendiculairement à l'axe A2 du logement de réception 39.

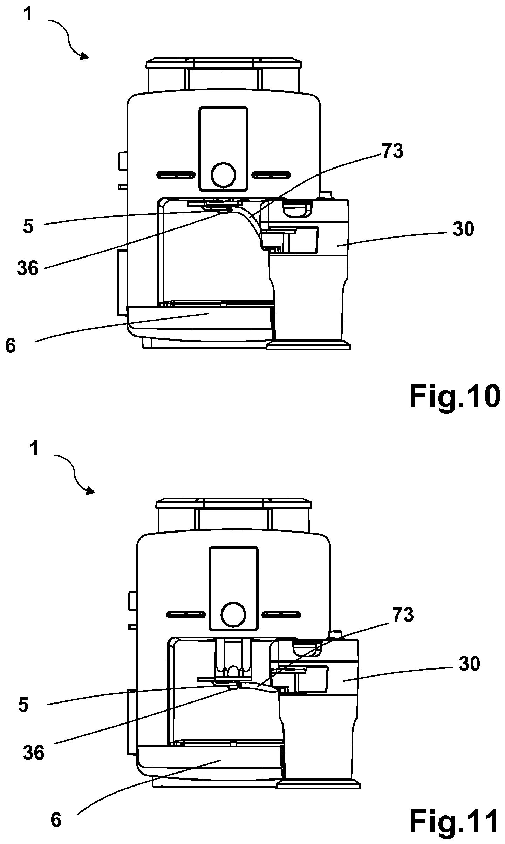

Tel que visible aux figures 10 et 11, l'extrémité 36 du conduit de distribution 73 est agencée sur la buse de sortie café 5. La buse de sortie café 5 est mobile entre une position relevée (Fig. 10) dans laquelle un récipient de grande taille peut être placé sur le repose-tasse 6 et une position abaissée (Fig.11) dans laquelle un récipient de petite taille peut être placé sur le repose-tasse 6. Le conduit de distribution 73 est formé dans une partie centrale par un tube souple en silicone.

Conformément aux figures 4 et 5, le conduit de distribution 73 comporte un embout 87 présentant une forme cylindrique. L'embout 87 est destiné à coopérer avec une extrémité 79 (Fig. 5) de la chambre de sortie 78 du système de moussage 75. L'extrémité 79 comporte une forme complémentaire de la forme cylindrique de l'embout 87 et un revêtement souple pour permettre d'assembler de manière étanche ou de séparer la conduite de distribution 73 du système de moussage 75.

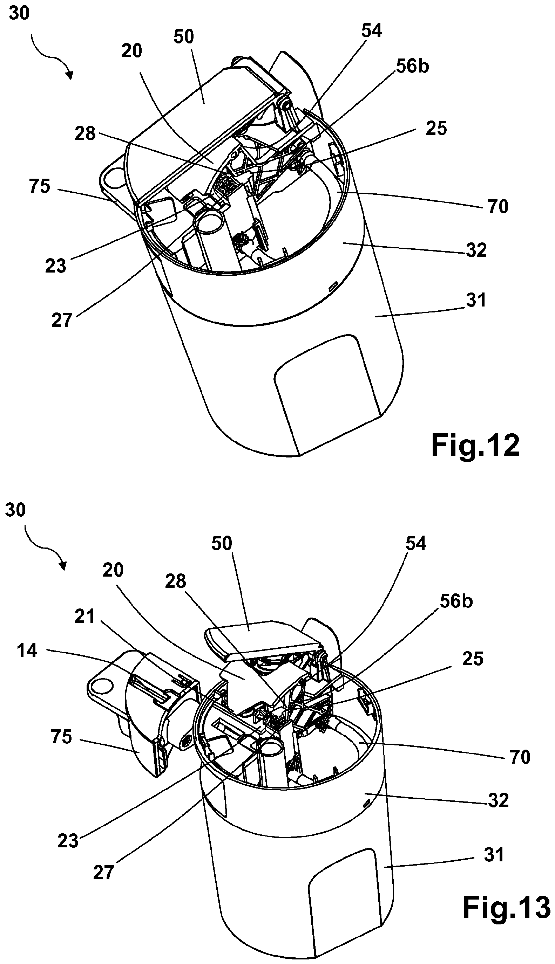

Tel que visible aux figures 4 à 7, 12 et 13, la pièce de transmission 54 du système d'accouplement comporte une paroi 20 présentant une forme en arc de cercle. La paroi 20 comporte une extrémité de forme trapézoïdale formant un verrou 21. Le verrou 21 est mobile entre une position de maintien (Fig.6 et 12) du système de moussage 75 lorsque le système d'accouplement est en position accouplée et une position de libération (Fig.7 et 13) du système de moussage lorsque le système d'accouplement est en position désaccouplée.

Le système de moussage 75 est amovible du couvercle 32 entre une position assemblée (Fig.12) et une position extraite (Fig.13). Le passage de la position extraite à la position assemblée se fait par une translation horizontale. Le système de moussage comporte une cavité 14. Le verrou 21 en position de maintien est agencé dans la cavité 14 pour empêcher l'extraction du système de moussage 75. Le verrou 21 en position de libération est en dehors de la cavité 14 pour permettre l'extraction du système de moussage 75.

Conformément aux figures 4 à 8, 12 et 13, le dispositif 30 comporte une butée 23 agencée dans le couvercle 32 de manière coulissante en translation entre une position bloquée et une position désengagée. La butée 23 comporte une excroissance 24 (Fig.4) coopérant avec le système de moussage 75 pour faire passer la butée 23 de la position bloquée à la position désengagée lorsque le système de moussage 75 passe de la position extraite à la position assemblée. La butée 23 est soumise à l'effort de rappel d'un ressort 27 pour faire passer la butée 23 de la position désengagée à la position bloquée.

La butée 23 comporte un bossage 25 qui s'étend vers la pièce de transmission 54, plus particulièrement vers une face 28 de la grande branche 57b. Lorsque le système d'accouplement est en position désaccouplée et que le système de moussage 75 est en position extraite, la butée 23 est en position bloquée dans laquelle le bossage 25 est agencé en vis-à-vis de la face 28 (Fig.13). Ainsi, la pièce de transmission 54 ne peut pivoter et le système d'accouplement est immobilisé. Si le système de moussage 75 est introduit en position assemblée, le système de moussage 75 coopère avec l'excroissance 24 pour faire passer la butée 23 en position désengagée dans laquelle le bossage 25 est décalé de la face 28 (Fig.8 et 12). Ainsi, la pièce de transmission 54 peut pivoter et le système d'accouplement est libéré.

En fonctionnement, l'utilisateur verse du lait dans le réservoir 31 et repositionne le couvercle 32 sur le réservoir 31. Il relève le levier 50 dont le chemin de came 84 agit sur la tige 58 de la pièce de transmission 54 pour la faire pivoter. Le pivotement de la pièce de transmission 54 induit le pivotement des logements 59a, 59b qui entrainent les tourillons 44a, 44b et le mors 40 mobile vers le bas en l'écartant du mors fixe 46 pour créer un espace de réception de l'embout de buse de sortie vapeur 2 (Fig. 7).

L'utilisateur positionne, dans un mouvement d'approche horizontal du dispositif 30 vers la machine à café 1, le mors fixe 46 sur la face supérieure 4 de l'embout de buse de sortie vapeur 2 et le mors 40 mobile sous l'embout de buse de sortie vapeur 2 et pose le dispositif 30 sur la base de réception 7 de la machine à café 1. Ensuite, il bascule le levier 50 dans la position rabattue sur la face supérieure 34 du couvercle 32, ce qui a pour effet de faire translater le mors 40 mobile vers le mors fixe 46 pour immobiliser l'embout de buse de sortie vapeur 2 et établir une liaison étanche entre l'embout de buse de sortie vapeur 2 et le conduit d'entrée vapeur 70.

L'utilisateur saisit la poignée 86 de préhension de l'extrémité 36 du conduit de distribution 73 et assemble le logement de réception 39 sur la protubérance 11 de la buse de sortie café 5. L'aimant 37 et la partie magnétique 12 maintiennent cet assemblage. L'utilisateur peut alors poser un récipient sur le repose-tasse 6 et ajuster la position de la buse de sortie café 5 et de l'extrémité 36.

L'utilisateur appuie ensuite sur le bouton de commande 9b de distribution d'un cappuccino, soit l'enchainement d'un cycle de distribution de lait chaud moussé et d'un cycle de distribution d'un café. La chaudière de la machine à café 1 est tout d'abord activée pour générer un flux de vapeur qui circule par l'embout de buse de sortie vapeur 2 et par le conduit d'entrée vapeur 70 pour passer dans le système de moussage 75. Le mélange de l'air, du lait avec la vapeur forme du lait chauffé et moussé qui est distribué par l'extrémité 36 dans le récipient. Lorsque la quantité programmé de lait moussé est atteinte, la machine à café réalise un cycle de distribution d'un café qui s'écoule dans le récipient par la buse sortie café 5. Une boisson du type cappuccino peut donc être réalisée automatiquement après un appui sur le bouton de commande 9b, sans intervention de l'utilisateur.

L'utilisateur peut ensuite séparer l'extrémité 36 de la buse de sortie café 5 et relever le levier 50 en position déployée pour désaccoupler le dispositif 30 de la machine à café 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif (30) de production d'une boisson à base de lait comportant un système d'accouplement destiné à coopérer avec un embout de buse de sortie vapeur (2) d'une machine à café (1), ledit système d'accouplement présentant une position accouplée, dans laquelle une liaison étanche est établie entre l'embout de buse de sortie vapeur (2) et le dispositif (30), et une position désaccouplée, dans laquelle le dispositif (30) peut être séparé de l'embout de buse de sortie vapeur (2), le dispositif (30) comportant un système de moussage (75) amovible entre une position assemblée sur le dispositif (30) et une position extraite du dispositif (30), **caractérisé en ce que** le dispositif (30) comporte des moyens de sécurité à l'extraction (14, 21) qui empêche le système de moussage (75) de passer de la position assemblée à la position extraite lorsque le système d'accouplement est en position accouplée et/ou des moyens de sécurité à l'accouplement (23, 54) qui empêchent le système d'accouplement de passer de la position désaccouplée à la position accouplée lorsque le système de moussage (75) n'est pas en position assemblée.

2. Dispositif (30) de production d'une boisson à base de lait selon la revendication 1, **caractérisé en ce que** les moyens de sécurité à l'extraction (14, 21) et/ou les moyens de sécurité à l'accouplement (23, 54) sont des moyens mécaniques

3. Dispositif (30) de production d'une boisson à base de lait selon l'une quelconque des revendications précédentes, **caractérisé en ce que** les moyens de sécurité à l'extraction du système de moussage comportent un verrou (21) appartenant au système d'accouplement, ledit verrou (21) étant mobile entre une position de maintien du système de moussage (75) lorsque le système d'accouplement est en position accouplée et une position de libération du système de moussage (75) lorsque le système d'accouplement est en position désaccouplée.

4. Dispositif (30) de production d'une boisson à base de lait selon la revendication 3, **caractérisé en ce que** le verrou (21) coopère en position de maintien avec une cavité (14) agencée sur le système de moussage (75).

5. Dispositif (30) de production d'une boisson à base de lait selon l'une quelconque des revendications 3 ou 4, **caractérisé en ce que** le verrou (21) est mobile en rotation.

6. Dispositif (30) de production d'une boisson à base de lait selon l'une quelconque des revendications 3 à 5, **caractérisé en ce que** le système d'accouplement comporte un mors (40) mobile, un levier (50) de manoeuvre et une pièce de transmission (54) du mouvement du levier (50) au mors (40) mobile, la pièce de transmission (54) comportant le verrou (21).

7. Dispositif (30) de production d'une boisson à base de lait selon l'une quelconque des revendications précédentes, **caractérisé en ce que** les moyens de sécurité à l'accouplement comportent une butée (23) mobile entre une position bloquée et une position désengagée.

8. Dispositif (30) de production d'une boisson à base de lait selon la revendication 7, **caractérisé en ce que** la butée (23) comporte une excroissance (24) coopérant avec le système de moussage (75) pour faire passer la butée (23) de la position bloquée à la position désengagée lorsque le système de moussage (75) passe de la position extraite à la position assemblée.

9. Dispositif (30) de production d'une boisson à base de lait selon l'une quelconque des revendications 7 ou 8, **caractérisé en ce que** les moyens de sécurité à l'accouplement comportent des moyens de rappel (27) de la butée (23) de la position désengagée vers la position bloquée.

10. Dispositif (30) de production d'une boisson à base de lait selon la revendication 9, **caractérisé en ce que** les moyens de rappel comportent un ressort (27).

11. Dispositif (30) de production d'une boisson à base de lait selon l'une quelconque des revendications 7 à 10, **caractérisé en ce que** les moyens de sécurité à l'accouplement comportent un organe mobile (54) faisant partie du système d'accouplement, ledit organe mobile (54) coopérant avec la butée (23) pour immobiliser le système d'accouplement lorsque la butée (23) est en position bloquée et libérer le système d'accouplement lorsque la butée (23) est en position désengagée.

12. Dispositif (30) de production d'une boisson à base de lait selon la revendication 11, **caractérisé en ce que** le système d'accouplement comporte un mors (40) mobile, un levier (50) de manoeuvre et une pièce de transmission (54) du mouvement du levier (50) au mors (40) mobile, l'organe mobile étant formé par la pièce de transmission (54).

13. Machine à café (1) comportant un dispositif (30) de production d'une boisson à base de lait conforme à l'une des revendications 1 à 12.

14. Machine à café (1) selon la revendication 13, **caractérisée en ce que** l'embout de buse de sortie vapeur (2) est coudé vers le bas.

## Patentansprüche

1. Vorrichtung (30) zur Herstellung eines Getränks auf Milchbasis mit einem Kupplungssystem, das dazu bestimmt ist, mit einem Endstück einer Dampfauslassdüse (2) einer Kaffeemaschine (1) zusammenzuwirken, wobei das Kupplungssystem eine angekoppelte Position aufweist, in der zwischen dem Endstück der Dampfauslassdüse (2) und der Vorrichtung (30) eine dichte Verbindung hergestellt wird, und eine entkoppelte Position aufweist, in der die Vorrichtung (30) von dem Endstück der Dampfauslassdüse (2) getrennt werden kann, wobei die Vorrichtung (30) ein Aufschäumsystem (75) umfasst, das zwischen einer in die Vorrichtung (30) installierten Position und einer aus der Vorrichtung (30) herausgezogenen Position bewegt werden kann, **dadurch gekennzeichnet, dass** die Vorrichtung (30) Mittel zur Ausziehsicherung (14, 21) umfasst, die verhindern, dass das Aufschäumsystem (75) von der installierten Position in die herausgezogene Position übergeht, wenn sich das Kupplungssystem in angekoppelter Position befindet und/oder Mittel zur Kupplungssicherung (23, 54), die verhindern, dass das Kupplungssystem von der entkoppelten Position in die angekoppelte Position übergeht, wenn sich das Aufschäumsystem (75) nicht in der installierten Position befindet.

2. Vorrichtung (30) zur Herstellung eines Getränks auf Milchbasis nach Anspruch 1, **dadurch gekennzeichnet, dass** die Mittel zur Ausziehsicherung (14, 21) und/oder die Mittel zur Kupplungssicherung (23, 54) mechanische Mittel sind.

3. Vorrichtung (30) zur Herstellung eines Getränks auf Milchbasis nach einem der vorhergehenden Ansprüche, **dadurch gekennzeichnet, dass** die Mittel zur Ausziehsicherung des Aufschäumsystems eine Verriegelung (21) umfassen, die zum Kupplungssystem gehört, wobei sich die Verriegelung (21) zwischen einer Halteposition des Aufschäumsystems (75), wenn sich das Kupplungssystem in angekoppelter Position befindet, und einer Freigabeposition des Aufschäumsystems (75), wenn sich das Kupplungssystem in entkoppelter Position befindet, bewegen kann.

4. Vorrichtung (30) zur Herstellung eines Getränks auf Milchbasis nach Anspruch 3, **dadurch gekennzeichnet, dass** die Verriegelung (21) in Halteposition mit einer Vertiefung (14) zusammenwirkt, die auf dem Aufschäumsystem (75) angeordnet ist.

5. Vorrichtung (30) zur Herstellung eines Getränks auf Milchbasis nach einem der Ansprüche 3 oder 4, **dadurch gekennzeichnet, dass** die Verriegelung (21) drehbar ist.

6. Vorrichtung (30) zur Herstellung eines Getränks auf Milchbasis nach einem der Ansprüche 3 bis 5, **dadurch gekennzeichnet, dass** das Kupplungssystem eine bewegliche Backe (40), einen Betätigungshebel (50) und ein Element (54) zur Übertragung der Bewegung des Hebels (50) auf die bewegliche Backe (40) umfasst, wobei das Übertragungselement (54) die Verriegelung (21) umfasst.

7. Vorrichtung (30) zur Herstellung eines Getränks auf Milchbasis nach einem der vorhergehenden Ansprüche, **dadurch gekennzeichnet, dass** die Mittel zur Kupplungssicherung einen Anschlag (23) umfassen, der zwischen einer verriegelten Position und einer entriegelten Position bewegt werden kann.

8. Vorrichtung (30) zur Herstellung eines Getränks auf Milchbasis nach Anspruch 7, **dadurch gekennzeichnet, dass** der Anschlag (23) einen Fortsatz (24) umfasst, der mit dem Aufschäumsystem (75) zusammenwirkt, um den Anschlag (23) von der verriegelten Position in die entriegelte Position zu überführen, wenn das Aufschäumsystem (75) von der herausgezogenen Position in die installierte Position übergeht.

9. Vorrichtung (30) zur Herstellung eines Getränks auf Milchbasis nach einem der Ansprüche 7 oder 8, **dadurch gekennzeichnet, dass** die Mittel zur Kupplungssicherung Mittel (27) zur Rückstellung des Anschlags (23) von der entriegelten Position in die verriegelte Position umfassen.

10. Vorrichtung (30) zur Herstellung eines Getränks auf Milchbasis nach Anspruch 9, **dadurch gekennzeichnet, dass** die Rückstellmittel eine Feder (27) umfassen.

11. Vorrichtung (30) zur Herstellung eines Getränks auf Milchbasis nach einem der Ansprüche 7 bis 10, **dadurch gekennzeichnet, dass** die Mittel zur Kupplungssicherung ein bewegliches Element (54) umfassen, das Teil des Kupplungssystems ist, wobei das bewegliche Element (54) mit dem Anschlag (23) zusammenwirkt, um das Kupplungssystem zu festzustellen, wenn sich der Anschlag (23) in der verriegelten Position befindet, und das Kupplungssystem freizugeben, wenn sich der Anschlag (23) in der entriegelten Position befindet.

12. Vorrichtung (30) zur Herstellung eines Getränks auf Milchbasis nach Anspruch 11, **dadurch gekennzeichnet, dass** das Kupplungssystem eine bewegliche Backe (40), einen Betätigungshebel (50) und ein Element (54) zur Übertragung der Bewegung des Hebels (50) auf die bewegliche Backe (40) umfasst, wobei das bewegliche Element von dem Übertragungselement (54) gebildet wird.

13. Kaffeemaschine (1) mit einer Vorrichtung (30) zur Herstellung eines Getränks auf Milchbasis nach einem der Ansprüche 1 bis 12.

14. Kaffeemaschine (1) nach Anspruch 13, **dadurch gekennzeichnet, dass** das Endstück der Dampfauslassdüse (2) nach unten gekrümmt ist.

## Claims

1. Device (30) for producing a milk-based drink comprising a coupling system intended to cooperate with a steam outlet nozzle tip (2) of a coffee machine (1), said coupling system having a coupled position, in which a sealed connection is created between the steam outlet nozzle tip (2) and the device (30), and an uncoupled position, in which the device (30) can be separated from the steam outlet nozzle tip (2), the device (30) comprising a foaming system (75) movable between a position assembled on the device (30) and a position extracted from the device (30), **characterised in that** the device (30) comprises extraction safety means (14, 21) which prevent the foaming system (75) from moving from the assembled position to the extracted position when the coupling system is in the coupled position and/or coupling safety means (23, 54) which prevent the coupling system from moving from the uncoupled position to the coupled position when the foaming device (75) is not in the assembled position.

2. Device (30) for producing a milk-based drink according to claim 1,
**characterised in that** the extraction safety means (14, 21) and/or the coupling safety means (23, 54) are mechanical means.

3. Device (30) for producing a milk-based drink according to any one of the preceding claims, **characterised in that** the extraction safety means of the foaming system comprise a lock (21) belonging to the coupling system, said lock (21) being mobile between a position in which the foaming system (75) is locked when the coupling system is in the coupled position and a position in which the foaming system (75) is released when the coupling system is in the uncoupled position.

4. Device (30) for producing a milk-based drink according to claim 3,
**characterised in that** the lock (21) cooperates with a cavity (14) arranged on the foaming system (75) when in the locked position.

5. Device (30) for producing a milk-based drink according to claim 3 or 4,
**characterised in that** the lock (21) is rotatable.

6. Device (30) for producing a milk-based drink according to any one of claims 3 to 5, **characterised in that** the coupling system comprises a mobile jaw (40), an operating lever (50) and a transmission part (54) for transmitting the movement of the lever (50) to the mobile jaw (40), the transmission part (54) comprising the lock (21).

7. Device (30) for producing a milk-based drink according to any one of the preceding claims, **characterised in that** the coupling safety means comprise a stop (23) movable between a blocked position and a disengaged position.

8. Device (30) for producing a milk-based drink according to claim 7,
**characterised in that** the stop (23) comprises a protuberance (24) cooperating with the foaming system (75) to move the stop (23) from the blocked position to the disengaged position when the foaming system (75) moves from the extracted position to the assembled position.

9. Device (30) for producing a milk-based drink according to claim 7 or 8,
**characterised in that** the coupling safety means comprise return means (27) for moving the stop (23) from the disengaged position to the blocked position.

10. Device (30) for producing a milk-based drink according to claim 9, **characterised in that** the return means comprise a spring (27).

11. Device (30) for producing a milk-based drink according to any one of claims 7 to 10, **characterised in that** the coupling safety means comprise a mobile member (54) which is part of the coupling system, said mobile member (54) cooperating with the stop (23) to immobilise the coupling system when the stop (23) is in the blocked position and release the coupling system when the stop (23) is in the disengaged position.

12. Device (30) for producing a milk-based drink according to claim 11,
**characterised in that** the coupling system comprises a mobile jaw (40), an operating lever (50) and a transmission part (54) for transmitting the movement of the lever (50) to the mobile jaw (40), the mobile member being formed by the transmission part (54).

13. Coffee machine (1) comprising a device (30) for producing a milk-based drink according to one of claims 1 to 12.

14. Coffee machine (1) according to claim 13, **characterised in that** the steam outlet nozzle tip (2) is bent downwards.
